(19) Europäisches Patentamt / European Patent Office / Office européen des brevets

(11) **EP 3 216 216 B1**

(12) **EUROPEAN PATENT SPECIFICATION**

(45) Date of publication and mention of the grant of the patent:
**09.01.2019 Bulletin 2019/02**

(21) Application number: **15858591.9**

(22) Date of filing: **12.11.2015**

(51) Int Cl.:
*G06T 7/55* (2017.01)  *G06T 7/579* (2017.01)
*G06T 7/593* (2017.01)  *G06T 7/80* (2017.01)
*G06T 7/285* (2017.01)  *H04N 5/247* (2006.01)
*H04N 13/167* (2018.01)  *H04N 13/189* (2018.01)
*H04N 13/172* (2018.01)  *H04N 5/262* (2006.01)

(86) International application number:
**PCT/CN2015/094490**

(87) International publication number:
**WO 2016/074639 (19.05.2016 Gazette 2016/20)**

(54) **METHODS AND SYSTEMS FOR MULTI-VIEW HIGH-SPEED MOTION CAPTURE**

VERFAHREN UND SYSTEME FÜR SCHNELLE BEWEGUNGSERFASSUNG MIT MEHREREN ANSICHTEN

PROCÉDÉS ET SYSTÈMES POUR UNE CAPTURE DE MOUVEMENT À GRANDE VITESSE MULTI-VUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2014 US 201414540394**

(43) Date of publication of application:
**13.09.2017 Bulletin 2017/37**

(73) Proprietor: **Huawei Technologies Co. Ltd.
Shenzhen, Guangdong 518129 (CN)**

(72) Inventors:
• **GU, Jinwei
Princeton, NJ 08540 (US)**

• **JIANG, Wei
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**CN-A- 101 277 454      CN-A- 104 079 914
US-A1- 2012 162 379      US-A1- 2012 176 481
US-A1- 2014 270 706**

**Description**

<u>**TECHNICAL FIELD**</u>

The present disclosure relates generally to multiple view point high speed video applications.

<u>**BACKGROUND**</u>

Capturing video of object motion (e.g., a vehicle, person, or other object moving, etc.) can be useful in a variety of applications. Typically, images of the object motion captured at a high speed or frame rate are slowed down during presentation of the images enabling examination of characteristics and features that would likely go undetected otherwise. Having multiple high speed video streams captured from multiple viewpoints is even more helpful in various applications. However, conventional approaches to capturing high speed video are usually expensive and resource intensive.

There are a variety of applications that attempt to use high speed video. In auto industry car crash testing, being able to view a high-speed crash process in slow motion from multiple angles can be very helpful in identifying potential design defects and improve safety. In scientific research fields such as biomechanics, it is often important to clearly observe rapid experimental processes such as high-speed animal movement from multiple viewpoints. In TV broadcasting events (e.g., such as sports, etc.), attempts are made to capture high-speed motion from multiple viewpoints in order to achieve free viewpoint video and try to create an immersive experience. In the movie and computer game industries, attempts at capturing the performance of actors/actresses in high-speed from multiple viewpoints is often utilized for attempts at many further video post-processing tasks such as relighting and matting.

In order to capture high-speed motion from multiple viewpoints, one traditional approach is to use multiple, synchronized high-speed cameras capturing images from different viewpoints. This approach, however, usually has very high costs (e.g., high bandwidth cost, hardware cost, image quality cost, etc.). In terms of bandwidth cost, conventional attempts usually involve extremely large bandwidth transfers and storage of multiple high-speed video streams simultaneously. For example, a single 1000fps HD video camera records about 6GBytes of raw data per second, which is over 30 times more than comparable data typically recorded by a regular-speed camera. With respect to hardware cost, a typical high speed video camera (e.g., 1000fps, etc.) can cost significantly more than the cost of a regular video camera of the same resolution (e.g., 30fps, etc.). Furthermore, additional expensive hardware is often required for accurate synchronization among multiple high-speed cameras. There are also typically impacts to image quality given that high-speed cameras often have very limited exposure time (e.g., less than 1/1000 second for a 1000fps camera), and thus usually require much stronger light to ensure high image quality compared to regular-speed video cameras. As a result, many high-speed cameras are only monotonic and cannot capture color images. As a practical matter, these high costs typically associated with high speed cameras often result in significantly limiting the number of captured viewpoints about the target scene.

There are a few traditional approaches that attempt to use an array of regular-speed cameras (e.g., that are typically available at much lower costs than high speed cameras) to emulate high-speed cameras, however these conventional attempts are often problematic. One popular approach attempts to use multiple regular-speed cameras in a stagger fashion. Conventional attempts at using multiple regular-speed cameras in a stagger fashion have various limitations. In such methods, the regular-speed cameras often start recording with a different time offset and the conventional attempts usually require special hardware control support (e.g., involves pixel-wise exposure control that is typically quite expensive itself, etc.) to enable the cameras to start recording with millisecond-level accuracy. Moreover, these methods are usually limited to emulation of a single viewpoint high-speed camera, which often severely limits their usefulness. Some approaches further require that the captured images be deblurred, however image deblurring itself is generally considered an ill-posed open problem and usually very computation intensive. US 2012/0162379 A1, for instance, discloses 3D image / video generation by combining the output of a primary image / video capture device and an auxiliary image / video capture device, where the auxiliary image / video capture device is of lower quality w.r.t. resolution, frame rate etc.

SUMMARY OF THE INVENTION

Systems and methods that facilitate an efficient and effective multi-view hybrid system for high-speed motion analysis are presented. In one embodiment, a device according to claim 1 includes a processing circuit that performs multi-view processing and a memory that stores information for the processing circuit. The processing circuit receives input associated with a 3D scene, wherein the input includes information associated with a first frame sequence at a first frame rate corresponding to a first camera and information associated with a second frame sequence at a second frame rate corresponding to a second camera; the first frame rate is faster than the second frame rate. Temporally synchronized frames recorded in the first frame sequence and the second frame sequence at given timestamps are aligned, a three dimensional (3D) model for a dynamic scene at the first frame rate is created, and synthesized image frame sequences associated with a plurality of additional viewpoints are generated at the first frame rate. The first frame sequence and the second frame sequence can be calibrated. A calibration pre-process is conducted to determine intrinsic parameters and extrinsic parameters associated with the first camera and the second camera.

In one exemplary implementation, the 3D model is based upon 3D key frame reconstruction, constrained 3D motion estimation, and 3D key frame interpolation. The 3D key frame reconstruction can include a visual-hull based method to estimate a 3D mesh model of a target object as the 3D model of a target scene. A kinematic-based 3D motion model is used to estimate a set of motion parameters from the 3D key frames. Approximate optimal kinematic-based 3D motion parameters are used to establish an intermediate interpolated 3D frame sequence based on consecutive 3D key frame sequences and the interpolated 3D frame sequence gives a dynamic 3D model at the first rate for a dynamic scene from a virtual camera viewpoint at the first rate. Calibrated frame sequences captured from multiple viewpoints can be used to enhance video quality including denoising and correlation among multiple views. Spatial-temporal coherence within and among multiple video streams can be used to increase signal-to-noise ratio.

A multi-view method according to claim 9 can include: calibrating a first video frame sequence at a first frame rate from a first camera and a second video frame sequence at a second frame rate from a second camera, wherein the first frame rate is faster than the second frame rate; creating a three dimension (3D) model based upon 3D key frame reconstruction, constrained 3D motion estimation, and 3D key frame interpolation; and generating a plurality of synthesized image frame sequences at the first frame rate, wherein the plurality of synthesized image frame sequences are associated with a plurality of viewpoints different from a viewpoint associated with the first camera. The calibrating can use a plurality of intrinsic parameters and a plurality of extrinsic parameters to produce a calibrated first frame sequence and a calibrated second frame sequence. The calibrating can also include at least one of the following: correcting lens distortion for the first video frame sequence and the second video frame sequence based upon the plurality of intrinsic parameters; and enabling geometric calibration by warping the first video frame sequence and the second video frame sequence to align with a reference sequence based upon the plurality of intrinsic parameters and the plurality of extrinsic parameters. The plurality of intrinsic parameters and the plurality of extrinsic parameters include at least one of the following: an intrinsic camera parameter for the first camera and an intrinsic camera parameter for the second camera; lens distortion coefficients for the first camera and the second camera; and an extrinsic 6 degree-of-freedom position and pose for the first camera and the second camera.

In one exemplary implementation, the 3D key frame reconstruction further includes: reconstructing a sequence of 3D key frames based upon a calibrated second video frame sequence; ascertaining a kinematic motion parameter based upon the sequence of 3D key frames, an intrinsic parameter, and an extrinsic parameter; and establishing a sequence of interpolated 3D frames for a virtual camera viewpoint at a first frame rate based upon the sequence of 3D key frames and the kinematic motion parameter. Generating a plurality of synthesized image frame sequences further includes: creating a textured 3D model sequence by texture mapping a calibrated regular frame rate image sequence to a high frame rate dynamic 3D model; and constructing a synthesized image frame sequence for a virtual high-speed camera viewpoint based upon the textured 3D model sequence. Generating a synthesized image frame sequence can include utilizing spatial-temporal coherence in multi-view video denoising.

In one embodiment, a system according to claim 16 includes: a first camera that captures images at a first speed; a second camera that captures images at a second speed, the second speed is slower than the first speed; and a multi-view system for simulating a plurality of viewpoints at the first speed in addition to a viewpoint of the first camera. The image results of the first camera capture and the second camera capture are utilized to sample respective temporal appearance discrepancies. Spatial-temporal coherence in the sampled image results are utilized to synthesis video streams at the first speed from a viewpoint different than the viewpoint of the first camera. The first camera can be one of a first plurality of cameras that capture images at the first rate and the second camera can be one of a second plurality of cameras that capture images at the second rate, wherein the number of cameras included in the first plurality of cameras is less than the number of cameras included in the second plurality of cameras. In an alternative embodiment, the number of cameras included in the first plurality of cameras is the same as or more than the number of cameras included in the second plurality of cameras. The first frame rate is in or above the range of hundreds of frames per second the second rate is in the range of tens of frames per second. Positions and poses of the first camera and second camera can change with respect to a scene but remain fixed relative to one another during a scene capture. The positions and poses of the first camera and second camera can also change with respect to one another after a scene capture and before a second scene capture

## BRIEF DESCRIPTION OF THE DRAWINGS

The accompanying drawings, which are incorporated in and form a part of this specification, are included for exemplary illustration of the principles of the present invention and not intended to limit the present invention to the particular implementations illustrated therein. The drawings are not to scale unless otherwise specifically indicated.

Figure 1 is a flow chart of an exemplary method in accordance with one embodiment of the present invention.

Figure 2 is a block diagram of system in accordance with one embodiment of the present invention.

Figure 3 is a flow chart of an exemplary multiple viewpoint video method in accordance with one embodiment of the present invention.

Figure 4 is a flow chart of video alignment process in accordance with one embodiment of the present invention.

Figure 5 is a flow chart of three dimensional model process in accordance with one embodiment of the present invention.

Figure 6 is a flow chart of a viewpoint creation process in accordance with one embodiment of the present invention.

Figure 7 is a block diagram of an exemplary multi-view system approach in accordance with one embodiment of the present invention.

Figure 8 illustrates a workflow of one embodiment of a new hybrid system approach.

Figure 9 illustrates a workflow of an alternative embodiment of the proposed hybrid system.

Figure 10 is a block diagram of an exemplary virtual high-speed camera viewpoint synthesized image frame in accordance with one embodiment.

## DETAILED DESCRIPTION

Reference will now be made in detail to the various embodiments of the present disclosure, examples of which are illustrated in the accompanying drawings. While described in conjunction with these embodiments, it will be understood that they are not intended to limit the disclosure to these embodiments. On the contrary, the disclosure is intended to cover alternatives, modifications and equivalents, which may be included within the scope of the disclosure as defined by the appended claims. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Systems and methods that facilitate an efficient and effective multi-view hybrid system for high-speed motion analysis are presented. The multi-view hybrid system can include a mix of relatively few high-speed cameras (e.g., 1000fps, etc.) and a greater number of regular-speed cameras (e.g., 30fps, etc.) that are utilized to provide more high speed views than high speed cameras included in the system. The new multi-view hybrid approach exploits spatial-temporal coherence in sampled images from both the regular-speed cameras and high-speed cameras to increase the number of high speed motion viewpoints, unlike limited previous attempts (e.g., that were directed to static images, that did not exploit the spatial-temporal coherence in multi-view video denoising, etc.). In one embodiment, the high-speed motion captured from one or a few high-speed cameras is "transferred" to other viewpoints to create a set of virtual high-speed camera viewpoints that provide the ability to obtain high-speed motion information from multiple corresponding viewpoints.

In one embodiment, received high speed video streams and regular speed video streams are calibrated. The calibrated regular speed video streams associated with the regular speed cameras are used to reconstruct 3D key frames at the regular frame rate. These reconstructed 3D key frames, together with the 2D high frame rate images captured by the high-speed cameras, are used to estimate optimal kinematic model parameters that control the motion between two neighboring 3D key frames. The kinematic model parameters are utilized to interpolate intermediate 3D frames at a high frame rate and the interpolated 3D frames are then used to synthesize 2D images in synthesized image frame sequences from other viewpoints at the high frame rate. The multiple image sequences captured from multiple viewpoints can be processed together to enhance the image quality. The processed images can be texture mapped to the above reconstructed 3D models for synthesizing 2D images at virtual high-speed camera viewpoints. Thus, the virtual high-speed camera viewpoints results are realized in a manner that facilitates efficient bandwidth use and low hardware costs by utilizing a single or few high-speed cameras jointly with multiple regular-speed cameras in the hybrid system.

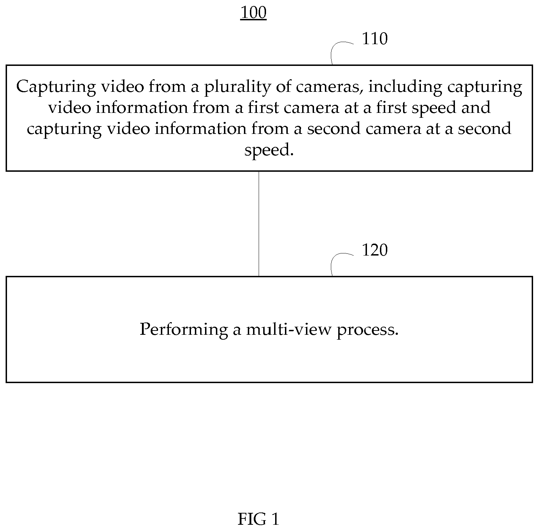

Figure 1 is a flow chart of an exemplary method 100 in accordance with one embodiment. A general overview of the operations of exemplary method 100 are initially presented and additional explanation of multi-view approaches is set forth in later portions of the detailed description.

In block 110, a video camera process is performed. The video camera process includes capturing a scene by multiple cameras and generating a plurality of video frame sequences associated with a plurality of view points corresponding to the multiple cameras respectively. In one embodiment, the plurality of video frame sequences include a first video frame sequence at a first speed or frame rate and a second video frame sequence at a second speed or frame rate that is slower than the first speed or frame rate. The first speed or frame rate is faster than the second speed or frame rate. The first video frame sequence and the second video frame sequence can include images of a dynamic scene (e.g., a person running, a car test crash, etc.) captured at approximately the same time.

It is appreciated that new multi-view hybrid approaches are compatible with a variety of implementations. The first frame rate can be a relatively high-speed frame rate and the second frame rate can be a regular frame rate. The second camera can be one of a plurality of relatively low cost regular-speed cameras placed relatively densely (e.g., to measure spatial appearance discrepancy over multiple viewpoints, etc.) while the first camera is a high-speed cameras (e.g., used to sample temporal appearance discrepancy at one viewpoint, etc.).

In block 120, a multiple viewpoint video method or process is performed. The multiple viewpoint or multi-view process generates frame sequence information (e.g., a video stream or frame sequence, etc.) from additional viewpoints without physical cameras at the viewpoints. The first video frame sequences and the second video frame sequence are temporally synchronized. For a given timestamp, respective frames can be located in the first video sequence at the timestamp and in the second video sequence at the timestamp. In one embodiment, information associated with a first video frame sequence captured by a first camera at a first rate or speed is utilized to sample temporal appearance discrepancy while information associated with a second video frame sequence captured by a second camera at a second rate or speed is utilized to measure spatial appearance discrepancy. The spatial-temporal coherence in these sampled images is then utilized to create or generate a synthesized video sequence at the first frame rate or speed. The synthesized video sequence can be from the perspective of a viewpoint different than viewpoints of the first camera.

It is appreciated that the new multi-view hybrid imaging approach can be implemented at a variety of frame rates and configurations. In one embodiment, one frame rate is relatively faster than another. For ease of explanation, the following description is presented in terms of high speed cameras with high speed frame rates and regular speed cameras with regular speed frame rates.

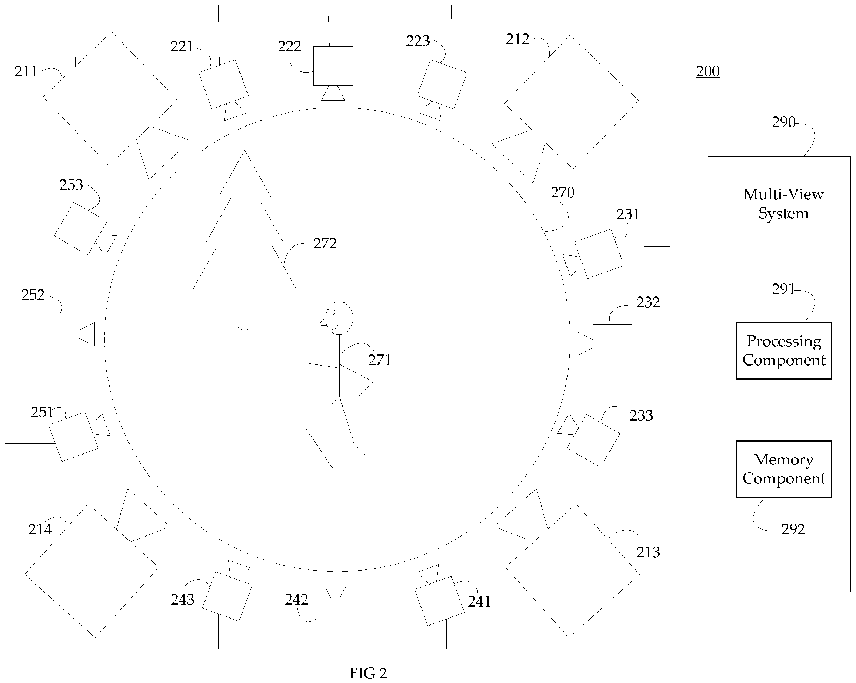

Figure 2 is a block diagram of system 200 in accordance with one embodiment of a cost-effective hybrid system for multi-view high-speed motion capture. System 200 includes high speed cameras (e.g., 211, 212, 213, 214, etc.), regular speed cameras (e.g., 221, 222, 223, 231, 232, 233, 241, 242, 243, 251, 252, 253, etc.) and multi-view system 290. The cameras capture images from scene 270. The scene can include static objects (e.g., tree 272, etc.) and dynamic objects (e.g., a person 272 running, etc.). Multi-view system 290 includes processing component 291 and memory component 292 which perform various operations associated with creating or synthesizing video or image frame sequences at a high speed or frame rate from viewpoints other than the viewpoints of the high speed physical cameras (e.g., 211, 212, 213, 214, etc.). Additional explanation of multi-view process approaches is set forth in later portions of the detailed description.

It is appreciated that new multi-view approaches are compatible with a variety of configurations and implementations. In one embodiment, a target dynamic scene is captured through a plurality of M regular-speed cameras and N high-speed cameras where N >= 1. The number of M regular-speed cameras can be larger than the number of N high-speed cameras. A plurality of M frame sequences at a regular frame rate and N frame sequences at a high frame rate are generated accordingly. The regular rate frame sequences come from regular-speed cameras recording the appearance of the target scene over time from a particular view at a regular frame rate (e.g. 24fps, 30fps, etc.). The high rate frame sequences come from high-speed cameras recording the appearance of the target scene over time from a particular view at a high frame rate (e.g., 500fps, 1000fps, etc.).

The plurality of M regular-speed cameras and N high-speed cameras are placed together into a hybrid imaging system (e.g., similar to system 200, etc.). In one embodiment, a regular-speed camera $L_i$ can be placed in the 3D real world arbitrarily, as long as there exists another regular-speed camera $L_j$ that has a large enough overlapping field of view (determined by a threshold $T_r$) with $L_i$. A high-speed camera $H_i$ can be placed in the 3D real world arbitrarily, as long as there exists another regular-speed camera $L_j$ that has a large enough overlapping field of view (determined by a threshold $T_h$) with $H_i$. The high-speed cameras can be placed relatively sparsely in the hybrid imaging system, while the regular-speed cameras can be placed more densely.

With respect to moving the positions of the regular-speed cameras and high-speed cameras, for a single dynamic scene, the relative positions and poses of the regular-speed cameras and high-speed cameras within the hybrid imaging system remain fixed during each recording. However, the position and pose of the hybrid imaging system itself can change during a recording (as long as the relative positions and poses remain substantially constant). In one exemplary implementation, the entire hybrid imaging system can be mounted on a moving platform for recording the scene and the platform can move but the positions of the cameras on the platform remain the same relative to one another. For capturing different dynamic scenes, the relative positions and poses of the regular-speed cameras and high-speed cameras can be reconfigured between scenes.

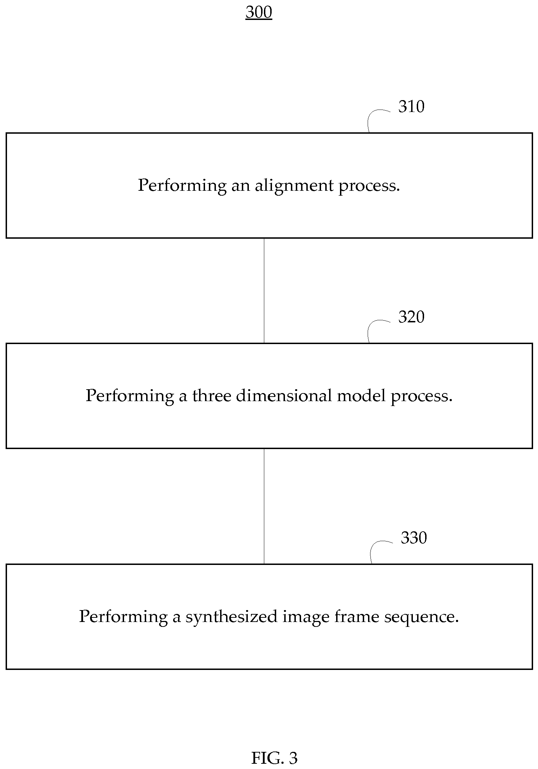

Figure 3 is a flow chart of an exemplary multiple viewpoint video method 300 in accordance with one embodiment. In one embodiment, multiple viewpoint video method 300 is similar to a multiple viewpoint video method performed in block 120.

In block 310, an alignment process is performed. The alignment process can include a calibration operation on a camera or the results of the capture process (e.g., results similar to results of block 110). The alignment process may include multiple views and the calibration is performed on multiple cameras. A plurality of intrinsic and extrinsic parameters can be used to align a set of temporally synchronized image frames. The image frames can be recorded in at a first frame rate (e.g., a high speed frame rate, etc.) and a second frame rate (e.g., a regular frame rate, etc.) and synchronized at a given timestamp.

In block 320, a three dimension (3D) model process is performed. The 3D model process includes reconstructing a 3D model associated with a scene captured in a video capture process (e.g., similar to block 110, etc.). The 3D model process can include: a three dimension 3D key frame reconstruction, a constrained 3D motion estimation, and a 3D key frame interpolation. Additional explanation of 3D model processes is set forth in later portions of the detailed description.

In block 330, a synthesized image frame sequence process is performed. In one embodiment, multiple frame sequences are created or synthesized. The multiple synthesized image frame sequences can be synthesized at frames rates (e.g., a high speed frame rate, etc.) faster than the second frame rate (e.g., a regular frame rate , etc.). Additional explanation of synthesized image frame sequence processes is set forth in later portions of the detailed description.

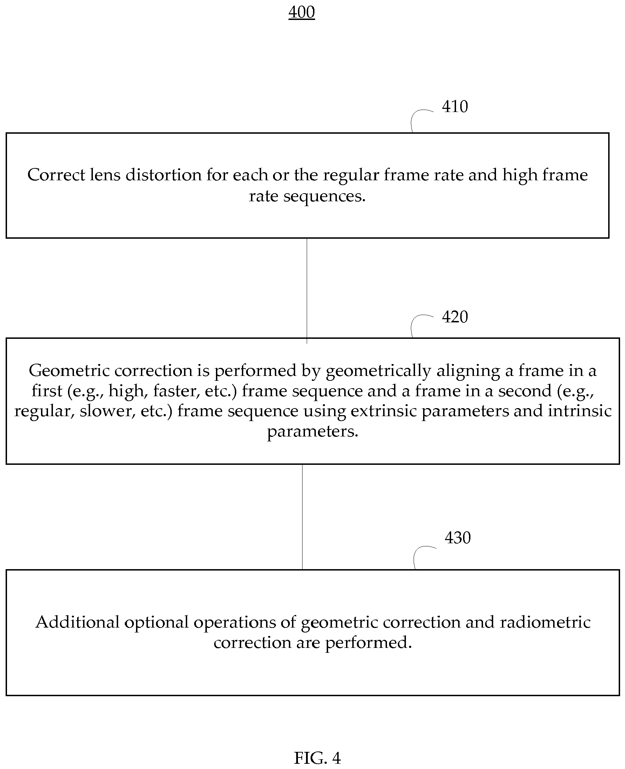

Figure 4 is a flow chart of video alignment process 400 in accordance with one embodiment. Video alignment process 400 is similar to the video alignment process of block 310. In one embodiment, a camera calibration process is performed. The outputs of the multi-camera calibration can include a calibrated first frame sequence at a first rate (e.g., high frame rate, etc.) and a calibrated second frame sequence at a second rate (e.g., regular frame rate image sequence), where at a given timestamp for a given real-world 3D scene point, a corresponding 2D image point can be located in the calibrated first frame sequence and the calibrated second frame sequence. The video alignment process 400 includes one or multiple of the following operations.

In block 410, lens distortion is corrected for the first frame sequences and the second frame sequences.

In block 420, geometric correction is performed by geometrically aligning a frame in a first (e.g., high, faster, etc.) frame sequence and a frame in a second (e.g., regular, slower, etc.) frame sequence using extrinsic parameters and intrinsic parameters. There are a variety of ways to obtain the intrinsic and extrinsic parameters. In one embodiment, a calibration pre-process is conducted to compute the intrinsic and extrinsic parameters of regular-speed cameras and high-speed cameras. A calibration pre-process can be adopted to compute the intrinsic camera parameters, the lens distortion coefficients, and the extrinsic 6 degree-of-freedom position and pose for the regular-speed cameras and high-speed cameras. In other embodiments, some of the intrinsic parameters can be obtained through the camera manufacturer, and the remaining intrinsic and extrinsic parameters can be computed through the calibration pre-process.

In block 430, additional optional operations of geometric correction and radiometric correction can also be performed. For example, operations such as radiometrically correcting the appearance of the regular frame rate and high frame rate image frames can be performed.

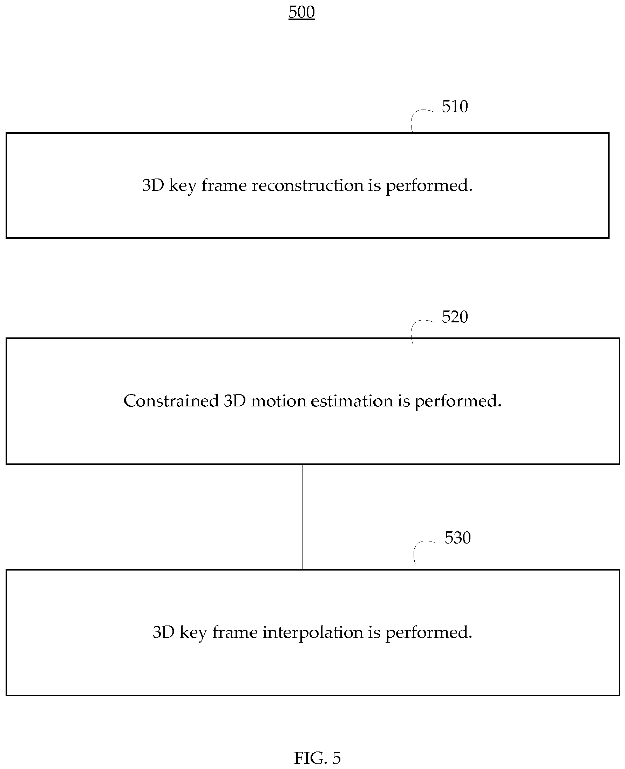

Figure 5 is a flow chart of three dimensional (3D) model process 500 in accordance with one embodiment of the present invention. Three dimensional model process 500 is similar to the three dimensional model process of block 320. In one embodiment, calibrated first frame rate image sequences and calibrated second frame rate image sequences from the alignment process (e.g. similar to block 310, etc.) are processed in the 3D and motion recovery process. The 3D and motion recovery process reconstructs a dynamic 3D model for a captured dynamic scene at a frame rate relatively fast frame rate (e.g., high speed frame rate, etc.).

In block 510, 3D key frame reconstruction is performed. Frames from a calibrated regular frame rate image sequence are used to reconstruct a 3D model sequence at the same regular frame rate of the regular-speed cameras (e.g., using standard multi-view stereo (MVS) methods, etc.). The 3D model sequence includes a sequence of 3D key frames. A calibrated regular frame rate image frame captured by the i-th regular-speed camera at timestamp t, where $i$ = 1,..., $M$, is denoted by $I_i^L(t)$. A reconstructed 3D key frame at timestamp $t$ is denoted by $S\left(\left\{I_1^L(t),..., I_M^L(t)\right\}\right)$.

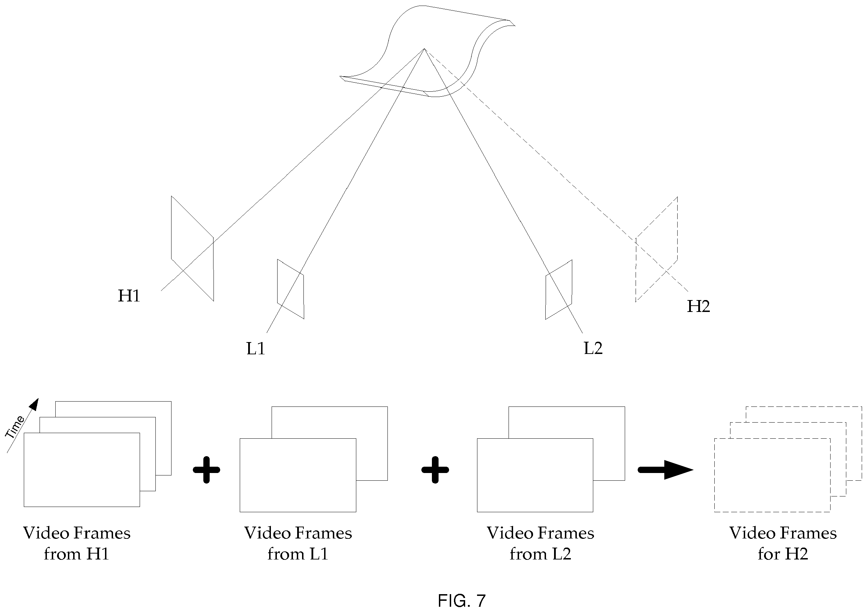

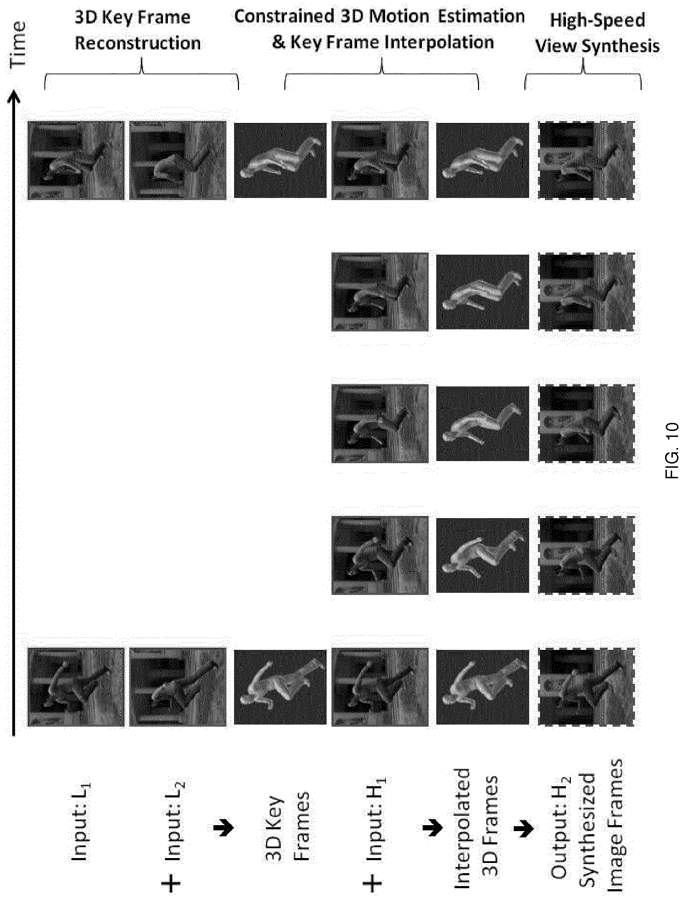

The reconstructed 3D key frame operates as a 3D model $S\left(\left\{I_1^L(t),..., I_M^L(t)\right\}\right)$ of a target scene reconstructed using the calibrated regular frame rate image frames $I_1^L(t),..., I_M^L(t)$. In one embodiment, a visual-hull based method described can be used to estimate a 3D mesh model of the target objects as the 3D model of the target scene, provided its high accuracy and near real-time performance. Other MVS approaches can also be used (e.g., L1 and L2 in Figures 7 and 10).

In block 520, constrained 3D motion estimation is performed. A kinematic-based 3D motion model can be used to estimate a set of motion parameters from the 3D key frames. The use of the kinematic-based 3D motion model is based on the assumption of continuous and smooth motion between consecutive key frames (which is typically reasonable because of the characteristics of real-world object motion). The motion model can be either parametric or non-parametric.

The reconstructed 3D key frame at timestamp t is $S\left(\left\{I_1^L(t),...,I_M^L(t)\right\}\right)$ where: $I_i^L(t)$ denotes a calibrated regular frame rate image frame captured by the i-th regular-speed camera at timestamp t; and $I_i^H(t)$ denotes a calibrated high frame rate image frame captured by the *i*-th high-speed camera at timestamp t, and *i* = 1,..., *N*. In one exemplary implementation $\theta$ denotes the set of kinematic-based 3D motion parameters. Given $\theta$ and the intrinsic and extrinsic parameters of the high-speed cameras from the alignment process, a synthesized image frame sequence at a high frame rate at the timestamp *t* of the *i*-th high-speed camera can be generated or computed as $P_i(\,S\left(\left\{I_1^L(t),...,I_M^L(t)\right\}\right),\Theta).,$ where $P_i$ is the projection operation from a 3D model to a 2D image. An optimal kinematic motion parameter $\theta$ can be approximated by minimizing the image discrepancy between the captured high frame rate image frames and the synthesized image frame sequence at a high frame rate. The minimization can be estimated by the following cost function:

$$\theta^* = \min{}_\theta \sum{}_{i=1,...,N} \sum_{i=1,...,N} f\left(I_i^H(t), P\left(S\left(\left\{i_i^L(t),...I_M^L(t)\right\}\right),\theta\right)\right) \dots\dots\dots\dots\dots\dots(1)$$

where $f(I_1, I_2)$ is a function that measures the image discrepancy between image $I_1$ and image $I_2$. Examples of the image discrepancy measurement function include sum of squared differences (SSD), sum of absolute differences (SAD), image structural similarity (SSIM), and so on. The above image discrepancy is summed for the *N* high-speed cameras.

In block 530, 3D key frame interpolation is performed. For a given virtual high-speed camera view, the approximate optimal kinematic-based 3D motion parameters $\theta^*$ are used to establish or compute an intermediate interpolated 3D frame sequence based on the consecutive 3D key frame sequences. This procedure is analogous to key framing and interpolation in 2D images in animation. The interpolated 3D frame sequence gives the high frame rate dynamic 3D model for the captured dynamic scene from the virtual high-speed camera viewpoint. After that, the interpolated 3D frame sequence is used as the input to the view synthesis, which generates synthesized image frame sequences from the virtual high-speed camera viewpoints.

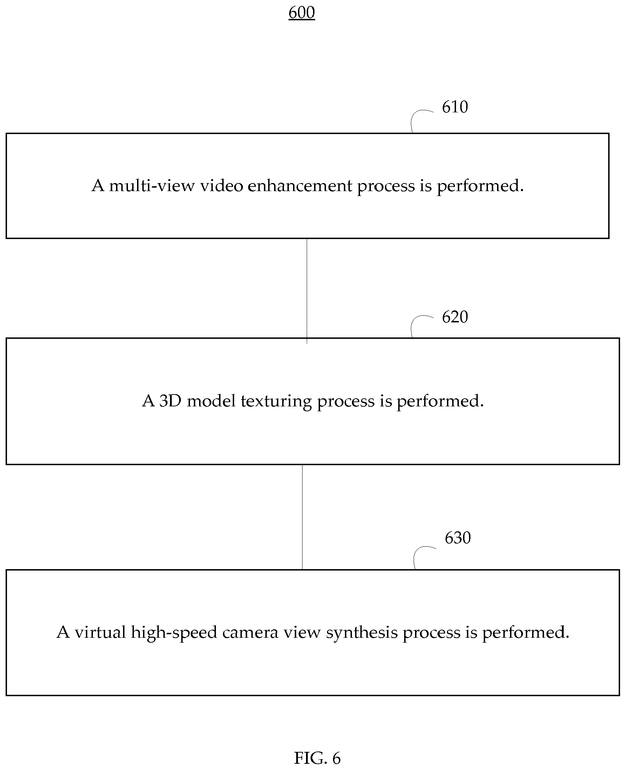

Figure 6 is a flow chart of a viewpoint creation process 600 in accordance with one embodiment. In one embodiment, viewpoint creation process 600 is similar to the viewpoint creation process of block 330.

In block 610, a multi-view video enhancement process is performed. The calibrated image frames captured from multiple viewpoints are used to enhance the video quality (e.g., especially for video denoising, etc.). This step is usually used for high-speed imaging because of the short exposure time for a frame. Adoption of various approaches can be utilized and extended for multi-view video enhancement. Specifically, the correlation among multiple views and the spatial-temporal coherence within and among multiple video streams are used to increase the signal-to-noise ratio.

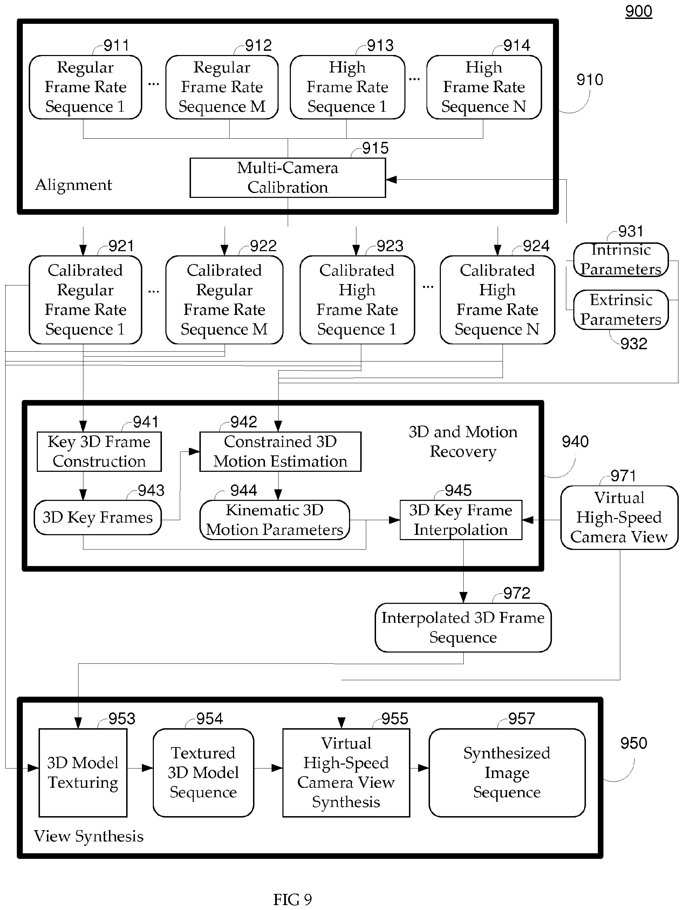

It is appreciated that the new multi-view approaches are readily adaptable to various implementations. The new multi-view approaches can be modified in accordance with various trade-off decisions. In an alternative embodiment (e.g., similar to the workflow described in Figure 9, etc.) the multi-view video enhancement step can be bypassed, which can reduce the amount of processing utilized but may cause noisy images.

In block 620, a 3D model texturing process is performed. The image frames of the enhanced video are geometrically mapped to the surface of the interpolated 3D frames of the target object to generate a textured 3D model sequence by using standard computer graphics techniques. In one exemplary implementation in which the multi-view video enhancement step is bypassed, the calibrated image frames captured from multiple viewpoints are directly used in the model texturing step to generate the textured 3D model sequence.

In block 630, a virtual high-speed camera view synthesized image frame sequence process is performed. For a given virtual high-speed camera viewpoint, a corresponding synthesized image sequence is generated based upon the textured 3D model sequence by using standard computer graphics methods.

Figure 7 is a block diagram of an exemplary multi-view system approach in accordance with one embodiment. A virtual high-speed camera ($H_2$) is synthesized by using a hybrid system that consists of two regular-speed cameras

($L_1$ and $L_2$) and one high-speed camera ($H_1$). The reconstructed 3D model sequence utilizes 3D key frames. Figure 7 provides an example of the above procedure, in which an example of two regular-speed cameras (e.g., $L_1$ and $L_2$) and a single high-speed camera (e.g., $H_1$) are used in the hybrid imaging system. After the 3D frames are interpolated, other virtual high-speed camera viewpoints (e.g., $H_2$) are synthesized by projecting the recovered 3D frames to the image space of the corresponding virtual high-speed cameras.

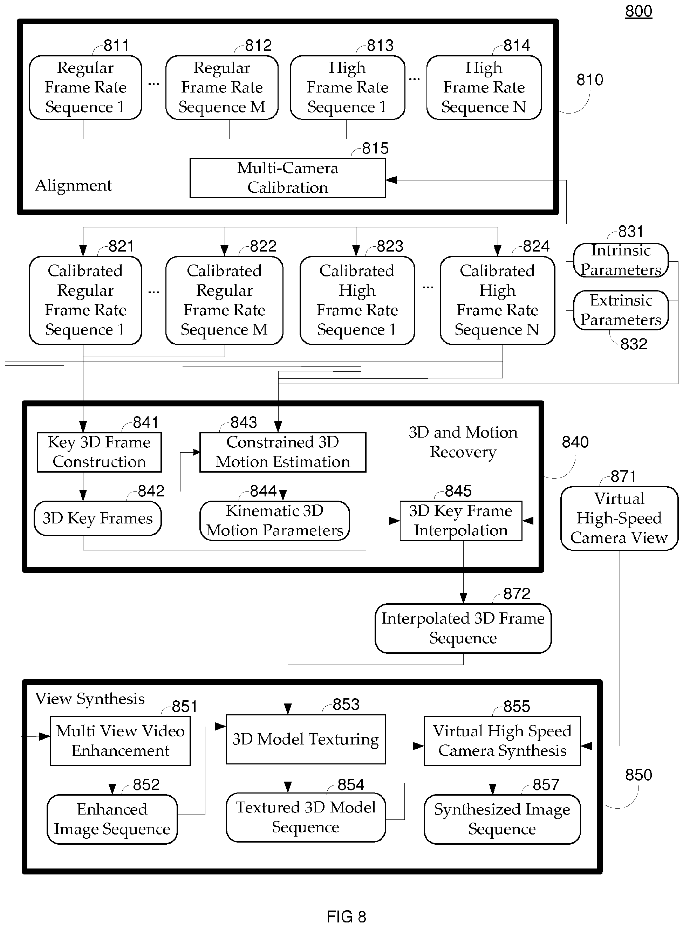

Figure 8 illustrates a workflow of one embodiment of a new hybrid system approach 800 in accordance with one embodiment. It includes three modules: an alignment module 810, a 3D and motion recovery module 840, and a view synthesis module 850. Alignment module 810 receives regular frame rate sequences (e.g., 811 through 812) and high frame rate sequences (e.g., 813 through 814) and performs multi-camera calibration operations 815 based upon intrinsic parameters 831 and extrinsic parameters 832. The resulting calibrated regular frame rate sequences (e.g., 821 through 822) and calibrated high frame rate sequences (e.g., 823 through 824) are forwarded to a 3D and motion recovery module 840. The 3D key frame operations 841 utilizes the calibrated regular frame rate sequences (e.g., 821 through 822) to produce 3D key frames 842. The 3D key frames 842 are forwarded to constrained 3D motion estimation 843 which also receives calibrated high frame rate sequences (e.g., 823 through 824). The constrained 3D motion estimation 843 produces the kinematic-base 3D motion parameters 844. The kinematic-base 3D motion parameters 844, the 3D key Frames 842 and virtual high speed camera view information 871 are fed into the 3D key frame interpolation 845 which produces interpolated 3D frame sequence 872. Next view synthesis operations 850 are performed. The calibrated regular frame rate sequences (e.g., 821 through 822) and calibrated high frame rate sequences (e.g., 823 through 824) are used in multi-view video enhancement operations 851 to produce enhanced image sequence 852. Enhanced image sequence 852 and interpolated 3D frame sequence 872 are used in 3D model texturing 853 which generates textured 3D model sequence 854 information that is used in virtual high speed camera synthesis 855 to generate synthesized image frame sequence 857.

Figure 9 illustrates a workflow of an alternative embodiment of the proposed hybrid system. In this alternative embodiment described in Figure 9, the multi-view video enhancement step can be bypassed. Similar to hybrid system approach 800, new hybrid system approach 900 includes three modules: an alignment module 910, a 3D and motion recovery module 940, and a view synthesis module 950. Alignment module 910 receives regular frame rate sequences (e.g., 911 through 912) and high frame rate sequences (e.g., 913 through 914) and performs multi-camera calibration operations 915 based upon intrinsic parameters 931 and extrinsic parameters 932. The resulting calibrated regular frame rate sequences (e.g., 921 through 922) and calibrated high frame rate sequences (e.g., 923 through 924) are forwarded to a 3D and motion recovery module 940. The 3D key frame operations 941 utilizes the calibrated regular frame rate sequences (e.g., 921 through 922) to produce 3D key frames 942. The 3D key frames 942 are forwarded to constrained 3D motion estimation 943 which also receives calibrated high frame rate sequences (e.g., 923 through 924). The constrained 3D motion estimation 943 produces the kinematic-base 3D motion parameters 944. The kinematic-base 3D motion parameters 944, the 3D key Frames 942 and virtual high speed camera view information 971 are fed into the 3D key frame interpolation 945 which produces interpolated 3D frame sequence 972. Next view synthesis operations 950 are performed. The calibrated regular frame rate sequences (e.g., 921 through 922) and calibrated high frame rate sequences (e.g., 923 through 924) along with interpolated 3D frame sequence 972 are used in 3D model texturing 953 which generates textured 3D model sequence 954 information that is used in virtual high speed camera synthesis 955 to generate synthesized image frame sequence 957. In one exemplary implementation, bypassing the multi-view video enhancement step can reduce processing operations but may cause noisy images.

Figure 10 is a block diagram of an exemplary virtual high-speed camera view synthesis from the hybrid system. Figure 10 shows major steps in one implementation including 3D and Motion Recovery Module and the View Synthesis Module. Two regular-speed cameras, $L_1$ and $L_2$, are used in the hybrid imaging system to reconstruct the 3D model sequence. The reconstructed 3D model sequence is called 3D key frames. After the 3D frames are interpolated, other virtual high-speed camera viewpoints (e.g., $H_2$ etc.) are synthesized by projecting the recovered 3D frames to the image space of the corresponding virtual high-speed cameras.

It is appreciated that the reconstructed 3D model sequence with textures described herein can be used in many applications (e.g., video relighting, high-resolution video mosaic, virtual object insertion, free-view video, 3D tele-presence/avatar, e-commerce, etc.) The new hybrid approach facilitates cost-effective imaging for multi-view high-speed motion analysis. By jointly using regular-speed cameras (e.g., which have relatively low costs and can be placed relatively densely to measure spatial appearance discrepancy over multiple viewpoints, etc.) and one or a few high-speed cameras (e.g., used to sample temporal appearance discrepancy at one or a few viewpoints, etc.). The new approach is able to overcome various issues and limitations (e.g., bandwidth cost, hardware cost, image quality cost, limited number of high speed viewpoints, etc.) often associated with conventional multi-view high-speed motion capture attempts (e.g., expensive special hardware to start cameras at high-precision time offset, only handle a single viewpoint, require densely placed high-speed cameras, etc.). By jointly using multiple regular-speed cameras and one or a few high-speed cameras, the new multi-view approach is able to reconstruct the 3D key frames and estimate the motion of dynamics scenes. The 3D key frames and motion are used to efficiently generate intermediate interpolated 3D frames which enable the effective synthesis of image frame sequences at a high frame rate from a set of virtual viewpoints. Multi-view video enhancement with multiple regular frame and high frame rate image sequences. By jointly using multiple regular frame rate and one or a few high frame rate image sequences, the new approach is able to enhance the signal-to-noise ratio for each image sequence, which can be especially useful for high-speed imaging because of the limited exposure time.

Embodiments described herein may be discussed in the general context of computer-executable instructions, such as program modules, residing on some form of computer-readable storage medium executed by one or more computers or other devices. By way of example, and not limitation, computer-readable storage media may comprise non-transitory computer-readable storage media. Non-transitory computer-readable storage media includes all computer-readable media except for a transitory, propagating signal. Computer-readable storage media includes volatile and nonvolatile, removable and non-removable media implemented in any method or technology for storage of information such as computer-readable instructions, data structures, program modules or other data. Generally, program modules include routines, programs, objects, components, data structures, etc., that perform particular tasks or implement particular abstract data types. The functionality of the program modules may be combined or distributed as desired in various embodiments.

In some embodiments, a device comprising means for a processing circuit that receives input associated with a three dimension (3D) scene is disclosed. The input includes information associated with a first frame sequence at a first frame rate corresponding to a first camera and information associated with a second frame sequence at a second frame rate corresponding to a second camera. The first frame rate is faster than the second frame rate and temporally synchronized image frames recorded in the first frame sequence and the second frame sequence at given timestamps are aligned. A three dimensional (3D) model for a dynamic scene at the first frame rate is created, and synthesized image frame sequences associated with a plurality of additional viewpoints are generated at the first frame rate. In addition, this embodiment may include memory means that store information for the processing circuit.

In other embodiments, means for a first camera that captures images at a first speed, means for a second camera that captures images at a second speed, the second speed is slower than the first speed, and means for a multi-view system for simulating a plurality of viewpoints at the first speed in addition to a viewpoint of the first camera are disclosed, where image results of the first camera capture and the second camera capture are utilized to sample respective temporal appearance discrepancies, and spatial-temporal coherence in the sampled image results are utilized to synthesis video streams at the first speed from a viewpoint different than the viewpoint of the first camera.

Although certain preferred embodiments and methods have been disclosed herein, it will be apparent from the foregoing disclosure to those skilled in the art that variations and modifications of such embodiments and methods may be made without departing from the scope of the invention as defined by the appended claims. It is intended that the invention shall be limited only to the extent required by the appended claims.

## Claims

1. A device comprising:

    a processing circuit that receives input associated with a three dimensional 3D scene, wherein the input includes information associated with a first frame sequence at a first frame rate corresponding to a first camera and information associated with a second frame sequence at a second frame rate corresponding to a second camera; the first frame rate is faster than the second frame rate, wherein temporally synchronized image frames recorded in the first frame sequence and the second frame sequence at given timestamps are aligned, a three dimensional 3D model for a dynamic scene at the first frame rate is created, and synthesized image frame sequences associated with a plurality of additional viewpoints are generated at the first frame rate; and
    a memory that stores information for the processing circuit.

2. The device of Claim 1, wherein the first frame sequence and the second frame sequence are calibrated.

3. The device of Claims 1 or 2, wherein a calibration pre-process is conducted to determine intrinsic parameters(831, 931) and extrinsic parameters(832, 932) associated with the first camera and the second camera.

4. The device of any of Claims 1, 2, or 3, wherein the 3D model is based upon 3D key frame reconstruction, constrained 3D motion estimation(843, 943), and 3D key frame interpolation(845, 945).

5. The device of Claim 4, wherein 3D key frame reconstruction includes a visual-hull based method to estimate a 3D mesh model of the target objects as the 3D model of a target scene.

6. The device of Claim 4, wherein a kinematic-based 3D motion model is used to estimate a set of motion parameters from the 3D key frames.

7. The device of Claim 4, wherein approximate optimal kinematic-based 3D motion parameters(844, 944) are used to establish an intermediate interpolated 3D frame sequence based on consecutive 3D key frame sequences and the interpolated 3D frame sequence gives a dynamic 3D model at the first rate for a dynamic scene from a virtual camera viewpoint at the first rate.

8. The device of Claim 4, wherein the calibrated frame sequences captured from multiple viewpoints are used to enhance video quality, including denoising and correlation among multiple views, and spatial-temporal coherence within and among multiple video streams are used to increase signal-to-noise ratio.

9. A method(300) comprising:

Calibrating(310) a first video frame sequence at a first frame rate from a first camera and a second video frame sequence at a second frame rate from a second camera, wherein the first frame rate is faster than the second frame rate;
Creating(320) a three dimensional 3D model based upon 3D key frame reconstruction, constrained 3D motion estimation(843, 943), and 3D key frame interpolation(845, 945); and
Generating(330) a plurality of synthesized image frame sequences at the first frame rate, wherein the plurality of synthesized image frame sequences are associated with a plurality of viewpoints different from a viewpoint associated with the first camera.

10. The method of Claim 9, wherein calibrating uses a plurality of intrinsic parameters(831, 931) and a plurality of extrinsic parameters(832, 932) and produces a calibrated first video frame sequence and a calibrated second video frame sequence.

11. The method of Claim 10, wherein calibrating includes at least one of the following:

correcting lens distortion for the first video frame sequence and the second video frame sequence based upon the plurality of intrinsic parameters(831, 931) ; and
enabling geometric calibration by warping the first video frame sequence and the second video frame sequence to align with a reference sequence based upon the plurality of intrinsic parameters(831, 931) and the plurality of extrinsic parameters(832, 932).

12. The method of Claim 10, wherein the plurality of intrinsic parameters(831, 931) and the plurality of extrinsic parameters(832, 932) include at least one of the following:

an intrinsic camera parameter for the first camera and an intrinsic camera parameter for the second camera;
lens distortion coefficients for the first camera and the second camera; and
an extrinsic 6 degree-of-freedom position and pose for the first camera and the second camera.

13. The method of claim 9, wherein the 3D key frame reconstruction includes:

reconstructing a sequence of 3D key frames based upon a calibrated second video frame sequence;
ascertaining a kinematic motion parameter based upon the sequence of 3D key frames, an intrinsic parameter, and an extrinsic parameter; and
establishing a sequence of interpolated 3D frames for a virtual camera viewpoint at the first frame rate based upon the sequence of 3D key frames and the kinematic motion parameter.

14. The method of claim 9, wherein generating a plurality of synthesized image frame sequences further includes:

creating a textured 3D model sequence by texture mapping a calibrated regular frame rate image sequence to a high frame rate dynamic 3D model; and
constructing a synthesized image frame sequence for a virtual camera viewpoint at the first rate based upon the textured 3D model sequence.

15. The method of claim 9, wherein generating a plurality of synthesized image frame sequences further includes utilizing spatial-temporal coherence in multi-view video denoising.

16. A system comprising:

a first camera that captures images at a first speed;
a second camera that captures images at a second speed, the second speed is slower than the first speed;
a multi-view system for simulating a plurality of viewpoints at the first speed in addition to a viewpoint of the first camera, wherein image results of the first camera capture and the second camera capture are utilized to sample respective temporal appearance discrepancies, and spatial-temporal coherence in the sampled image results are utilized to synthesis video streams at the first speed from a viewpoint different than the viewpoint of the first camera.

17. The system of Claim 16, wherein the first camera is one of a first plurality of cameras that capture images at the first rate and the second camera is one of a second plurality of cameras that capture images at the second rate, wherein the number of cameras included in the first plurality of cameras is less than the number of cameras included in the second plurality of cameras.

18. The system of Claim16 or 17, wherein the first frame rate is in or above the range of hundreds of frames per second the second rate is in the range of tens of frames per second.

19. The system of any of Claims 16, 17, or 18, wherein positions and poses of the first camera and second camera can change with respect to a scene but remain fixed relative to one another during a scene capture

20. The system of Claim 16, wherein positions and poses of the first camera and second camera change with respect to one another after a first scene capture and before a second scene capture

**Patentansprüche**

1. Vorrichtung, umfassend:

eine Verarbeitungsschaltung, die eine Eingabe empfängt, die mit einer dreidimensionalen, 3D, Szene assoziiert ist, wobei die Eingabe Informationen, die mit einer ersten Framesequenz bei einer ersten Framerate assoziiert sind, die einer ersten Kamera entspricht, und Informationen umfasst, die mit einer zweiten Framesequenz bei einer zweiten Framerate assoziiert sind, die einer zweiten Kamera entspricht; wobei die erste Framerate schneller als die zweite Framerate ist, wobei zeitlich synchronisierte Bildframes, die in der ersten Framesequenz und der zweiten Framesequenz aufgezeichnet sind, bei bestimmten Zeitstempeln abgestimmt sind, ein dreidimensionales, 3D, Modell für eine dynamische Szene bei der ersten Rate erstellt wird, und synthetisierte Bildframesequenzen, die mit einer Mehrzahl von zusätzlichen Blickpunkten assoziiert sind, bei der ersten Framerate generiert werden; und
einen Speicher, der Informationen für die Verarbeitungsschaltung speichert.

2. Vorrichtung nach Anspruch 1, wobei die erste Framesequenz und die zweite Framesequenz kalibriert sind.

3. Vorrichtung nach Anspruch 1 oder 2, wobei eine Kalibrierungsvorverarbeitung durchgeführt wird, um intrinsische Parameter (831, 931) und extrinsische Parameter (832, 932) zu bestimmen, die mit der ersten Kamera und der zweiten Kamera assoziiert sind.

4. Verfahren nach einem der Ansprüche 1, 2 oder 3, wobei das 3D-Modell auf 3D-Schlüsselframe-Rekonstruktion, eingeschränkter 3D-Bewegungsschätzung (843, 943) und 3D-Schlüsselframe-Interpolation (845, 945) basiert.

5. Vorrichtung nach Anspruch 4, wobei 3D-Schlüsselframe-Rekonstruktion ein Visual-Hull-basiertes Verfahren zum Schätzen eines 3D-Gittermodells der Zielobjekte als das 3D-Modell einer Zielszene umfasst.

6. Vorrichtung nach Anspruch 4, wobei ein Kinematik-basiertes 3D-Bewegungsmodell zum Schätzen eines Satzes von Bewegungsparametern aus den 3D-Schlüsselframes verwendet wird.

7. Vorrichtung nach Anspruch 4, wobei approximativ optimale Kinematik-basierte 3D-Bewegungsparameter (844, 944) zum Herstellen einer interpolierten 3D-Zwischenframesequenz basierend auf aufeinanderfolgenden 3D-Schlüsselframesequenzen verwendet werden, und die interpolierte 3D-Framesequenz ein dynamisches 3D-Modell bei der ersten Rate für eine dynamische Szene von einem virtuellen Kamerablickpunkt bei der ersten Rate ergibt.

8. Vorrichtung nach Anspruch 4, wobei die kalibrierten Framesequenzen, die von mehreren Blickpunkten aufgenommen werden, zum Verbessern von Videoqualität, einschließlich Entrauschung und Korrelation unter mehreren Ansichten, verwendet werden, und räumlich-zeitliche Kohärenz innerhalb mehrerer und unter mehreren Videoströmen zum Erhöhen des Signal-zu-Rausch-Verhältnisses verwendet wird.

9. Verfahren (300), umfassend:

Kalibrieren (310) einer ersten Videoframesequenz bei einer ersten Framerate von einer ersten Kamera und einer zweiten Videoframesequenz bei einer zweiten Framerate von einer zweiten Kamera, wobei die erste Framerate schneller als die zweite Framerate ist;
Erstellen (320) eines dreidimensionalen, 3D, Models basierend auf 3D-Schlüsselframe-Rekonstruktion, eingeschränkter 3D-Bewegungsschätzung (843, 943) und 3D-Schlüsselframe-Interpolation (845, 945); und
Generieren (330) einer Mehrzahl von synthetisierten Bildframesequenzen bei der ersten Framerate, wobei die Mehrzahl von synthetisierten Bildframesequenzen mit einer Mehrzahl von Blickpunkten assoziiert ist, die von einem mit der ersten Kamera assoziierten Blickpunkt verschieden sind.

10. Verfahren nach Anspruch 9, wobei das Kalibrieren eine Mehrzahl von intrinsischen Parametern (831, 931) und eine Mehrzahl von extrinsischen Parametern (832, 932) verwendet und eine kalibrierte erste Videoframesequenz und eine kalibrierte zweite Videoframesequenz erzeugt.

11. Verfahren nach Anspruch 10, wobei das Kalibrieren mindestens eines von Folgendem umfasst:

Korrigieren von Linsenverzerrung für die erste Videoframesequenz und die zweite Videoframesequenz basierend auf der Mehrzahl von intrinsischen Parametern (831, 931); und
Ermöglichen von geometrischer Kalibrierung durch Verzerren der ersten Videoframesequenz und der zweiten Videoframesequenz zum Abstimmen mit einer Referenzsequenz basierend auf der Mehrzahl von intrinsischen Parametern (831, 931) und der Mehrzahl von extrinsischen Parametern (832, 932).

12. Verfahren nach Anspruch 10, wobei die Mehrzahl von intrinsischen Parametern (831, 931) und die Mehrzahl von extrinsischen Parametern (832, 932) mindestens eines von Folgendem umfassen:

einen intrinsischen Kameraparameter für die erste Kamera und einen intrinsischen Kameraparameter für die zweite Kamera;
Linsenverzerrungskoeffizienten für die erste Kamera und die zweite Kamera; und
eine extrinsische Position und Pose in 6 Freiheitsgraden für die erste Kamera und die zweite Kamera.

13. Verfahren nach Anspruch 9, wobei die 3D-Schlüsselframe-Rekonstruktion umfasst:

Rekonstruieren einer Sequenz von 3D-Schlüsselframes basierend auf einer kalibrierten zweiten Videoframesequenz;
Bestimmen eines kinematischen Bewegungsparameters basierend auf der Sequenz von 3D-Schlüsselframes, einem intrinsischen Parameter und einem extrinsischen Parameter; und
Herstellen einer Sequenz von interpolierten 3D-Frames für einen virtuellen Kamerablickpunkt bei der ersten Framerate basierend auf der Sequenz von 3D-Schlüsselframes und dem kinematischen Bewegungsparameter.

14. Verfahren nach Anspruch 9, wobei das Generieren einer Mehrzahl von synthetisierten Bildframesequenzen ferner umfasst:

Erstellen einer texturierten 3D-Modellsequenz durch Texturabbildung einer Bildsequenz mit regulärer Framerate auf ein dynamisches 3D-Modell mit hoher Framerate; und
Konstruieren einer synthetisierten Bildframesequenz für einen virtuellen Kamerablickpunkt bei der ersten Rate basierend auf der texturierten 3D-Modellsequenz.

15. Verfahren nach Anspruch 9, wobei das Generieren einer Mehrzahl von synthetisierten Bildframesequenzen ferner ein Verwenden von räumlich-zeitlicher Kohärenz bei Entrauschung von Video mit mehreren Ansichten umfasst.

**16.** System, umfassend:

eine erste Kamera, die Bilder mit einer ersten Geschwindigkeit aufnimmt;
eine zweite Kamera, die Bilder mit einer zweiten Geschwindigkeit aufnimmt, wobei die zweite Geschwindigkeit langsamer als die erste Geschwindigkeit ist;
ein System mit mehreren Ansichten zum Simulieren einer Mehrzahl von Blickpunkten bei der ersten Geschwindigkeit zusätzlich zu einem Blickpunkt der ersten Kamera, wobei Bildergebnisse der Aufnahme der ersten Kamera und der Aufnahme der zweiten Kamera zum Abtasten jeweiliger zeitlicher Erscheinungsdiskrepanzen verwendet werden, und räumlich-zeitliche Kohärenz in den abgetasteten Bildergebnissen zum Synthetisieren von Videoströmen bei der ersten Geschwindigkeit von einem Blickpunkt verwendet wird, der vom Blickpunkt der ersten Kamera verschieden ist.

**17.** System nach Anspruch 16, wobei die erste Kamera eine von einer ersten Mehrzahl von Kameras ist, die Bilder bei der ersten Rate aufnehmen, und die zweite Kamera eine von einer zweiten Mehrzahl von Kameras ist, die Bilder bei der zweiten Rate aufnehmen, wobei die Anzahl von Kameras, die in der ersten Mehrzahl von Kameras enthalten sind, niedriger als die Anzahl von Kameras ist, die in der zweiten Mehrzahl von Kameras enthalten sind.

**18.** System nach Anspruch 16 oder 17, wobei die erste Framerate in oder über dem Bereich von hunderten von Frames pro Sekunde ist, und die zweite Rate im Bereich von dutzenden von Frames pro Sekunde ist.

**19.** System nach einem der Ansprüche 16, 17 oder 18, wobei Positionen oder Posen der ersten Kamera und der zweiten Kamera sich in Bezug auf eine Szene ändern, aber in Bezug aufeinander während einer Szenenaufnahme fest bleiben.

**20.** System nach Anspruch 16, wobei Positionen oder Posen der ersten Kamera und der zweiten Kamera sich in Bezug aufeinander nach einer Aufnahme einer ersten Szene und vor einer Aufnahme einer zweiten Szene ändern.

**Revendications**

**1.** Dispositif comprenant:

un circuit de traitement qui reçoit une entrée associée à une scène 3D tridimensionnelle, l'entrée comprenant des informations associées à une première séquence de trames à une première fréquence de trame correspondant à une première caméra et des informations associées à une deuxième séquence de trames à une deuxième fréquence de trame correspondant à une deuxième caméra ; la première fréquence de trame étant plus rapide que la deuxième fréquence de trame, les trames d'image synchronisées temporellement enregistrées dans la première séquence de trames et la deuxième séquence de trames à des estampilles temporelles données étant alignées, un modèle 3D tridimensionnel pour une scène dynamique à la première fréquence de trame étant créé, et des séquences de trames d'image synthétisées associées à une pluralité de points de vue supplémentaires étant générées à la première fréquence de trame ; et
une mémoire qui stocke des informations pour le circuit de traitement.

**2.** Dispositif selon la revendication 1, la première séquence de trames et la deuxième séquence de trames étant étalonnées.

**3.** Dispositif selon les revendications 1 ou 2, un pré-traitement d'étalonnage étant effectué pour déterminer des paramètres intrinsèques (831, 931) et des paramètres extrinsèques (832, 932) associés à la première caméra et à la deuxième caméra.

**4.** Dispositif selon l'une quelconque des revendications 1, 2 ou 3, le modèle 3D étant basé sur une reconstruction de trame d'image clé £D, une estimation de mouvement 3D contrainte (843, 943), et une interpolation de trame d'image clé 3D (845, 945).

**5.** Dispositif selon la revendication 4, une reconstruction de trame d'image clé 3D comprenant un procédé basé sur une coque visuelle pour estimer un modèle de maillage 3D des objets cibles en tant que modèle 3D d'une scène cible.

**6.** Dispositif selon la revendication 4, un modèle de mouvement 3D à base cinématique étant utilisé pour estimer un ensemble de paramètres de mouvement à partir des trames d'image clé 3D.

**7.** Dispositif selon la revendication 4, des paramètres de mouvement 3D à base cinématique approximativement optimaux (844, 944) étant utilisés pour établir une séquence de trames 3D interpolée intermédiaire sur la base de séquences de trames d'image clé 3D consécutives, et la séquence de trames 3D interpolée donnant un modèle 3D dynamique à la première fréquence pour une scène dynamique à partir d'un point de vue de caméra virtuelle à la première fréquence.

**8.** Dispositif selon la revendication 4, les séquences de trames étalonnées capturées à partir de multiples points de vue étant utilisées pour améliorer la qualité vidéo, comprenant le débruitage, et la corrélation entre de multiples vues et la cohérence spatio-temporelle à l'intérieur et parmi de multiples flux vidéo étant utilisées pour augmenter le rapport signal sur bruit.

**9.** Procédé (300) comprenant :

l'étalonnage (310) d'une première séquence de trames vidéo à une première fréquence de trame à partir d'une première caméra, et d'une deuxième séquence de trames vidéo à une deuxième fréquence de trame à partir d'une deuxième caméra, la première fréquence de trame étant plus rapide que la deuxième fréquence de trame ;
la création (320) d'un modèle 3.D tridimensionnel sur la base d'une reconstruction de trame d'image clé 3D, d'une estimation de mouvement 3D contrainte (843, 943), et d'une interpolation de trame d'image clé 3D (845, 945) ; et
la génération (330) d'une pluralité de séquences de trames d'image synthétisées à la première fréquence de trame, la pluralité de séquences de trames d'image synthétisées étant associées à une pluralité de points de vue différents d'un point de vue associé à la première caméra.

**10.** Procédé selon la revendication 9, l'étalonnage utilisant une pluralité de paramètres intrinsèques (831, 931) et une pluralité de paramètres extrinsèques (832, 932) et produisant une première séquence de trames vidéo étalonnée et une deuxième séquence de trames vidéo étalonnée.

**11.** Procédé selon la revendication 10, l'étalonnage comprenant au moins l'un des éléments suivants :

la correction de la distorsion de lentille pour la première séquence de trames vidéo et la deuxième séquence de trames vidéo sur la base de la pluralité de paramètres intrinsèques (831, 931) ; et
l'activation d'un étalonnage géométrique par déformation de la première séquence de trames vidéo et de la deuxième séquence de trames vidéo pour s'aligner avec une séquence de référence sur la base de la pluralité de paramètres intrinsèques (831, 931) et de la pluralité de paramètres extrinsèques (832, 932).

**12.** Procédé selon la revendication 10, la pluralité de paramètres intrinsèques (831, 931) et la pluralité de paramètres extrinsèques (832, 932) comprenant au moins l'un des éléments suivants :

un paramètre de caméra intrinsèque pour la première caméra et un paramètre de caméra intrinsèque pour la deuxième caméra ;
des coefficients de distorsion de lentille pour la première caméra et la deuxième caméra ; et
une position et une pose extrinsèques à 6 degrés de liberté pour la première caméra et la deuxième caméra.

**13.** Procédé selon la revendication 9, la reconstruction de trame d'image clé 3D comprenant :

la reconstruction d'une séquence de trames d'image clé 3D sur la base d'une deuxième séquence de trames vidéo étalonnée,
la détermination d'un paramètre de mouvement cinématique sur la base de la séquence de trames d'image clé 3D, d'un paramètre intrinsèque et d'un paramètre extrinsèque ; et
l'établissement d'une séquence de trames 3D interpolées pour un point de vue de caméra virtuel à la première fréquence de trame sur la base de la séquence de trames d'image clé 3D et du paramètre de mouvement cinématique.

**14.** Procédé selon la revendication 9, la génération d'une pluralité de séquences de trames d'image synthétisées comprenant en outre :

la création d'une séquence de modèle 3D texturée par mappage de texture d'une séquence d'image de fréquence de trame régulière étalonnée à un modèle 3D dynamique à fréquence de trame élevée ; et

la construction d'une séquence de trames d'image synthétisée pour un point de vue de caméra virtuel à la première fréquence sur la base de la séquence de modèle 3D texturée.

15. Procédé selon la revendication 9, la génération d'une pluralité de séquences de trames d'image synthétisées comprenant en outre l'utilisation d'une cohérence spatio-temporelle dans un débruitage vidéo multi-vue.

16. Système comprenant :

une première caméra qui capture des images à une première vitesse ;

une deuxième caméra qui capture des images à une deuxième vitesse, la deuxième vitesse étant plus lente que la première vitesse ;

un système multi-vue pour simuler une pluralité de points de vue à la première vitesse en plus d'un point de vue de la première caméra, les résultats d'image de la première capture de caméra et de la deuxième capture de caméra étant utilisés pour échantillonner des divergences d'apparence temporelle respectives, et la cohérence spatiale-temporelle dans les résultats d'image échantillonnés étant utilisée pour synthétiser des flux vidéo à la première vitesse à partir d'un point de vue différent du point de vue de la première caméra.

17. Système selon la revendication 16, la première caméra étant une caméra parmi une première pluralité de caméras qui capturent des images à la première fréquence et la deuxième caméra étant l'une d'une deuxième pluralité de caméras qui capturent des images à la deuxième fréquence, le nombre de caméras incluses dans la première pluralité de caméras étant inférieur au nombre de caméras incluses dans la deuxième pluralité de caméras.

18. Système selon la revendication 16 ou 17, la première fréquence de trame étant dans ou au-dessus de la plage de centaines de trames par seconde, la deuxième fréquence étant dans la plage de dizaines de trames par seconde.

19. Système selon l'une quelconque des revendications 16, 17 ou 18, des positions et des poses de la première caméra et de la deuxième caméra pouvant changer par rapport à une scène mais restant fixes les unes par rapport aux autres pendant une capture de scène.

20. Système selon la revendication 16, des positions et des poses de la première caméra et de la deuxième caméra changeant les unes par rapport aux autres après une première capture de scène et avant une deuxième scène.

<u>100</u>

110

Capturing video from a plurality of cameras, including capturing video information from a first camera at a first speed and capturing video information from a second camera at a second speed.

120

Performing a multi-view process.

FIG 1

EP 3 216 216 B1

FIG 2

17

300

310

Performing an alignment process.

320

Performing a three dimensional model process.

330

Performing a synthesized image frame sequence.

FIG. 3

400

410

Correct lens distortion for each or the regular frame rate and high frame rate sequences.

420

Geometric correction is performed by geometrically aligning a frame in a first (e.g., high, faster, etc.) frame sequence and a frame in a second (e.g., regular, slower, etc.) frame sequence using extrinsic parameters and intrinsic parameters.

430

Additional optional operations of geometric correction and radiometric correction are performed.

FIG. 4

500

510

3D key frame reconstruction is performed.

520

Constrained 3D motion estimation is performed.

530

3D key frame interpolation is performed.

FIG. 5

600

610

A multi-view video enhancement process is performed.

620

A 3D model texturing process is performed.

630

A virtual high-speed camera view synthesis process is performed.

FIG. 6

FIG. 7

800

## Alignment 810

Regular Frame Rate Sequence 1 811 ··· Regular Frame Rate Sequence M 812 High Frame Rate Sequence 1 813 ··· High Frame Rate Sequence N 814

Multi-Camera Calibration 815

Calibrated Regular Frame Rate Sequence 1 821 ··· Calibrated Regular Frame Rate Sequence M 822 Calibrated High Frame Rate Sequence 1 823 ··· Calibrated High Frame Rate Sequence N 824

Intrinsic Parameters 831

Extrinsic Parameters 832

## 3D and Motion Recovery 840

Key 3D Frame Construction 841

Constrained 3D Motion Estimation 843

3D Key Frames 842

Kinematic 3D Motion Parameters 844

3D Key Frame Interpolation 845

Virtual High-Speed Camera View 871

Interpolated 3D Frame Sequence 872

## View Synthesis 850

Multi View Video Enhancement 851

3D Model Texturing 853

Virtual High Speed Camera Synthesis 855

Enhanced Image Sequence 852

Textured 3D Model Sequence 854

Synthesized Image Sequence 857

FIG 8

900

**Alignment** — 910

| 911 Regular Frame Rate Sequence 1 | ... | 912 Regular Frame Rate Sequence M | 913 High Frame Rate Sequence 1 | ... | 914 High Frame Rate Sequence N |

915 Multi-Camera Calibration

931 Intrinsic Parameters

932 Extrinsic Parameters

| 921 Calibrated Regular Frame Rate Sequence 1 | ... | 922 Calibrated Regular Frame Rate Sequence M | 923 Calibrated High Frame Rate Sequence 1 | ... | 924 Calibrated High Frame Rate Sequence N |

**3D and Motion Recovery** — 940

941 Key 3D Frame Construction

942 Constrained 3D Motion Estimation

943 3D Key Frames

944 Kinematic 3D Motion Parameters

945 3D Key Frame Interpolation

971 Virtual High-Speed Camera View

972 Interpolated 3D Frame Sequence

**View Synthesis** — 950

953 3D Model Texturing

954 Textured 3D Model Sequence

955 Virtual High-Speed Camera View Synthesis

957 Synthesized Image Sequence

FIG 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120162379 A1